# FASCICULE DE BREVET EUROPEEN

(11) **EP 2 933 527 B1**
(45) Date de publication et mention de la délivrance du brevet: **21.09.2016**
(21) Numéro de dépôt: 15155720.4
(22) Date de dépôt: 19.02.2015
(51) Int. Cl.: F16F 15/14

(54) **DISPOSITIF D'AMORTISSEMENT D'OSCILLATIONS DE TORSION**
VORRICHTUNG ZUR TORSIONSSCHWINGUNGSDÄMPFUNG
DEVICE FOR DAMPING TORSIONAL OSCILLATIONS

(30) Priorité: 15.04.2014 FR 1453367
(43) Date de publication de la demande: 21.10.2015
(73) Titulaire: Valeo Embrayages, 80009 Amiens Cedex 2 (FR)
(72) Inventeur: Dutier, Ivan, 80260 Rainneville (FR); Brassart, Pascale, 80160 Saint Sauffieu (FR); Grieco, Giovanni, 92700 Colombes (FR); Fleche, Benoit, 60500 Chantilly (FR)
(74) Mandataire: Cardon, Nicolas

(56) Documents cités:
- DE-A1-102009 052 055
- DE-A1-102011 076 790
- DE-A1-102013 213 011

## Description

La présente invention concerne un dispositif d'amortissement d'oscillations de torsion, notamment pour un système de transmission de véhicule automobile.

Dans une telle application, le dispositif d'amortissement peut être intégré à un système d'amortissement de torsion d'un embrayage apte à relier sélectivement le moteur thermique à la boîte de vitesses, afin de filtrer les vibrations dues aux acyclismes du moteur.

En variante, dans une telle application, le dispositif d'amortissement peut être intégré à un disque de friction de l'embrayage.

On connaît de la demande DE 10 2009 052 055 un dispositif d'amortissement d'oscillations de torsion comprenant un support mobile autour d'un axe de rotation et une paire de masses pendulaires montées sur ce support avec une possibilité de déplacement limité par rapport à ce dernier grâce à des rouleaux coopérant d'une part avec des pistes de roulement ménagées dans le support, et d'autre part avec des pistes de roulement ménagées dans les masses pendulaires. Certaines masses pendulaires sont accordées à une première valeur d'ordre tandis que d'autres masses pendulaires sont accordées à une autre valeur d'ordre, de manière à pouvoir filtrer de façon efficace des oscillations de torsion ayant des fréquences différentes à un régime moteur donné.

Il existe un besoin pour bénéficier d'un dispositif d'amortissement d'oscillations de torsion, notamment pour système de transmission de véhicule automobile, qui permette d'obtenir une filtration efficace de ces oscillations.

L'invention vise à répondre à ce besoin et elle y parvient, selon l'un de ses aspects, à l'aide d'un dispositif d'amortissement d'oscillations de torsion, comprenant :
- un support apte à se déplacer en rotation autour d'un axe,
- au moins une paire de premières masses pendulaires, comprenant en outre au moins un premier organe de liaison solidarisant les premières masses pendulaires, ledit premier organe de liaison définissant au moins une première piste de roulement pour un premier organe de roulement permettant de guider le déplacement de la paire de premières masses pendulaires par rapport au support,
- au moins une paire de deuxièmes masses pendulaires, comprenant en outre au moins un deuxième organe de liaison solidarisant les deuxièmes masses pendulaires, ledit deuxième organe de liaison définissant au moins une deuxième piste de roulement pour un deuxième organe de roulement permettant de guider le déplacement de la paire de deuxièmes masses pendulaires par rapport au support,
le dispositif étant configuré de manière à ce que :
- les premières masses pendulaires permettent de filtrer une première valeur d'ordre des oscillations de torsion, et
- les deuxièmes masses pendulaires permettent de filtrer une deuxième valeur d'ordre des oscillations de torsion, différente de la première valeur d'ordre.

Les oscillations de torsion peuvent être liées aux acyclismes d'un moteur thermique associé au dispositif.

Au sens de la présente demande, une valeur d'ordre des oscillations de torsion est filtrée lorsque l'amplitude à cette valeur d'ordre des oscillations de torsion est réduite par le dispositif d'une valeur égale à au moins 10% de l'amplitude avant filtrage.

Au sens de la présente demande, le dispositif est au repos lorsqu'il n'agit pas sur l'amplitude des oscillations de torsion, l'amplitude de ces dernières restant sensiblement constante entre l'entrée et la sortie du dispositif.

Un tel dispositif permet ainsi de filtrer de façon satisfaisante les oscillations de torsion sur une large plage de fréquences, tout en utilisant les organes de liaison à la fois pour solidariser les masses pendulaires d'une paire et pour guider le déplacement des masses pendulaires. Le dispositif étant configuré pour filtrer des ordres, la fréquence des oscillations de torsion filtrée par les premières, respectivement deuxièmes, masses pendulaires varie en fonction de la vitesse de rotation du support. L'emploi du terme « ordre » implique que l'on traite des fréquences variables.

Au sens de la présente demande, « axialement » signifie « parallèlement à l'axe de rotation du support », « radialement » signifie « le long d'un axe appartenant à un plan perpendiculaire à l'axe de rotation du support et coupant cet axe de rotation », et « angulairement » ou « circonférentiellement » signifie « autour de l'axe de rotation du support ».

Au sein de chaque paire de masses pendulaires, une des masses pendulaires peut être disposée d'un premier côté du support et l'autre masse pendulaire peut être disposée d'un deuxième côté du support. Dans ce cas, la ou les pistes de roulement définies par chaque organe de liaison peut se trouver dans au moins un plan perpendiculaire à l'axe de rotation du support et coupant le support.

La première valeur d'ordre filtrée par les premières masses pendulaires peut être égale à l'ordre d'excitation d'un moteur thermique apte à être associé au dispositif. On désigne par « odre d'excitation d'un moteur thermique » le nombre d'explosions de ce moteur par tour de vilebrequin. On dit alors que les premières masses pendulaires sont accordées au premier ordre d'excitation du moteur.

Le moteur thermique est par exemple utilisé pour propulser un véhicule automobile. Le moteur présente notamment trois ou quatre cylindres.

Dans le cas d'un moteur thermique à trois cylindres, l'ordre d'excitation de ce moteur vaut 1,5 La fréquence filtrée par les premières masses pendulaires peut alors être variable, étant par exemple égale à 25 Hz pour une vitesse de rotation du vilebrequin de ce moteur thermique de 1000 tr/min. Cette fréquence filtrée devient égale à 50 Hz pour une vitesse de rotation du vilebrequin de ce même moteur thermique de 2000 tr/min et cette fréquence d'excitation devient égale à 100 Hz pour une vitesse de rotation du vilebrequin de 4000 tr/min. Ainsi, lorsque les premières masses pendulaires filtrent l'ordre d'excitation du moteur thermique, elles filtrent des fréquences différentes selon la vitesse de rotation de ce moteur.

Dans le cas d'un moteur thermique à quatre cylindres, l'ordre d'excitation de ce moteur vaut 2. La fréquence filtrée par les premières masses pendulaires peut similairement être variable, étant par exemple égale à 33,3 Hz pour une vitesse de rotation du vilebrequin de 1000 tr/min. Cette fréquence filtrée devient égale à 66,7 Hz pour une vitesse de rotation du vilebrequin de 2000 tr/min et cette fréquence d'excitation devient égale à 133,3 Hz pour une vitesse de rotation du vilebrequin de 4000 tr/min. Ainsi, des fréquences différentes sont filtrées par les premières masses pendulaires selon la vitesse de rotation du moteur.

En variante, la première valeur d'ordre filtrée par les premières masses pendulaires peut différer de l'ordre d'excitation du moteur thermique, étant notamment comprise entre 0,8 fois et 1,2 fois cet ordre d'excitation du moteur thermique. On dira alors que les premières masses pendulaires sont désaccordées du premier ordre d'excitation du moteur.

La deuxième valeur d'ordre filtrée par les deuxièmes masses pendulaires peut être égale à un multiple de l'ordre d'excitation du moteur thermique, par exemple au double ou au triple de l'ordre d'excitation du moteur thermique. On dira alors que les deuxièmes masses pendulaires sont accordées à un multiple du premier ordre d'excitation du moteur, par exemple au deuxième ou au troisième ordre d'excitation du moteur. Dans les cas mentionnés ci-dessus, lorsque la deuxième valeur d'ordre filtrée par les deuxièmes masses pendulaires est égale au double de l'ordre d'excitation du moteur thermique, cette deuxième valeur d'ordre est égale à trois dans le cas d'un moteur thermique à trois cylindres et à quatre dans le cas d'un moteur thermique à quatre cylindres.

Selon un exemple de mise en oeuvre de l'invention, la première valeur d'ordre filtrée par les premières masses pendulaires diffère de l'ordre d'excitation du moteur thermique, étant comprise entre 0,8 fois et 1,2 fois cet ordre d'excitation du moteur thermique, et la deuxième valeur d'ordre filtrée par les deuxièmes masses pendulaires est égale à un multiple, notamment au double, de l'ordre d'excitation du moteur thermique

Selon cet exemple de mise en oeuvre de l'invention, on tire avantage du fait que les deuxièmes masses pendulaires, bien qu'accordées à un multiple du premier ordre d'excitation du moteur, exercent également une action de filtrage de l'ordre d'excitation du moteur. On peut alors, contrairement à ce qui est indiqué dans DE 10 2009 052 055, ne pas exactement accorder les premières masses pendulaires au premier ordre d'excitation du moteur mais les désaccorder de ce premier ordre, la première valeur d'ordre n'étant alors plus égale à l'ordre d'excitation du moteur. On réduit de la sorte l'amplitude du déplacement des premières mases pendulaires, de sorte que cette amplitude est mieux adaptée à l'espace restreint disponible au sein du dispositif d'amortissement. Les chocs que subiraient lors de venue en butée les premières masses pendulaires qui présenteraient une amplitude de déplacement importante sont ainsi évités, de sorte que la saturation est réduite, voire éliminées en fonctionnement normal du dispositif, sans que cela n'affecte trop les performances globales du filtrage fourni par le dispositif.

La paire de premières masses pendulaires peut être angulairement décalée par rapport à la paire de deuxièmes masses pendulaires. La paire de premières masses pendulaires et la paire de deuxièmes masses pendulaires peuvent avoir sensiblement la même position radiale.

Le dispositif comprend par exemple deux paires de premières masses pendulaires et deux paires de deuxièmes masses pendulaires et chaque paire de premières masses pendulaires peut être disposée entre deux paires de deuxièmes masses pendulaires, et réciproquement.

Dans une variante, chaque paire de deuxièmes masses pendulaires peut chevaucher angulairement au moins partiellement une paire de premières masses pendulaires, les premières masses pendulaires étant alors décalées axialement par rapport aux deuxièmes masses pendulaires.

Chaque première masse pendulaire peut s'étendre angulairement sur un premier secteur angulaire mesuré depuis l'axe de rotation du support et chaque deuxième masse pendulaire peut s'étendre angulairement sur un deuxième secteur angulaire mesuré depuis l'axe de rotation du support, la valeur du premier secteur angulaire étant supérieure à la valeur du deuxième secteur angulaire. Les premières masses pendulaires présentent ainsi une forme différente de celle des deuxièmes masses pendulaires, permettant leur accord avec des valeurs d'ordre différentes. La mesure des premier et deuxième secteurs angulaires peut être effectuée lorsque le dispositif est au repos.

En variante, la valeur du deuxième secteur angulaire peut être supérieure à la valeur du premier secteur angulaire.

Selon un exemple de mise en oeuvre de l'invention, chaque paire de premières masses pendulaires comprend deux premiers organes de liaison et le support comprend pour chaque paire de premières masses pendulaires deux premières ouvertures espacées angulairement, chaque première ouverture recevant l'un des premiers organes de liaison. Autrement dit, chaque première ouverture est dédiée à un seul premier organe de liaison.

Selon cet exemple de mise en oeuvre de l'invention, un montant, réalisé d'une seule pièce ou non avec le support, peut être interposé entre ces premières ouvertures, et les premières ouvertures peuvent alors être, dans un plan orthogonal à l'axe de rotation, des images symétriques par rapport à une droite passant par l'axe de rotation et par le montant. La droite définissant l'axe de symétrie peut être la bissectrice de l'angle global formé entre les extrémités les plus opposées des deux premières ouvertures par delà le montant.

Chaque première ouverture peut s'étendre entre deux extrémités circonférentielles sur un troisième secteur angulaire mesuré depuis l'axe de rotation, et cette première ouverture peut, dans un plan orthogonal audit axe, être asymétrique par rapport à une droite passant par l'axe de rotation et faisant avec chaque extrémité circonférentielle de la première ouverture un angle égal à la moitié de la valeur dudit troisième secteur angulaire. Une telle forme d'ouverture peut permettre que le déplacement des premières masses pendulaires par rapport au support combine une translation desdites masses autour d'un axe parallèle à l'axe de rotation et une rotation autour de leur centre de gravité desdites masses.

Chaque premier organe de liaison peut s'étendre angulairement dans le sens trigonométrique d'une première vers une deuxième extrémité dudit premier organe de liaison, chaque premier organe de liaison étant associé à un premier organe de butée pour le déplacement des premières masses pendulaires par rapport au support, le premier organe de butée associé à l'un des premiers organes de liaison étant plus proche de la première que de la deuxième extrémité de ce premier organe de liaison, tandis que le premier organe de butée associé à l'autre premier organe de liaison est plus proche de la deuxième que de la première extrémité de cet autre premier organe de liaison.

Lorsque l'on observe les premiers organes de liaison depuis une direction parallèle à l'axe de rotation, on constate ainsi que les premiers organes de butée ne sont pas disposés au même emplacement d'un premier organe de liaison à l'autre. On parlera encore de « positionnement asymétrique » des premiers organes de butée.

Un tel positionnement des premiers organes de butée permet d'augmenter l'amplitude du déplacement des premières masses pendulaires. On peut ainsi trouver un compromis entre la nécessité d'avoir une amplitude de déplacement élevée des premières masses pendulaires pour assurer un filtrage efficace des oscillations de torsion et la nécessité que cette amplitude ne génère pas de saturation, comme mentionné ci-dessus. Le positionnement des premiers organes de butée permet également de déplacer radialement vers l'extérieur le centre de gravité des premières masses pendulaires, d'où un filtrage amélioré des oscillations de torsion par le dispositif.

Chaque premier organe de liaison peut définir une unique première piste de roulement coopérant avec un unique premier organe de roulement. Chaque premier organe de roulement coopérant avec une première piste de roulement définie par un premier organe de liaison peut par ailleurs coopérer avec une piste de roulement définie par le support, définie par exemple par un contour radialement extérieur de la première ouverture recevant ledit premier organe de liaison. Le premier organe de roulement peut ainsi guider le déplacement des premières masses par rapport au support.

Chaque premier organe de liaison peut être, dans un plan orthogonal à l'axe de rotation du support, asymétrique par rapport à la normale à la tangente au contact entre le premier organe de roulement et le premier organe de liaison lorsque le dispositif est au repos.Une telle forme de premier organe de liaison peut permettre, en complément ou non de la forme asymétrique mentionnée précédemment de première ouverture recevant ledit premier organe de liaison, que le déplacement des premières masses pendulaires par rapport au support combine une translation des masses autour d'un axe parallèle à l'axe de rotation du support et une rotation des premières masses pendulaires autour de leur centre de gravité.

Chaque paire de premières masses pendulaires peut ainsi comprendre :
- deux premières masses pendulaires,
- deux premiers organes de liaison solidarisant ces deux masses pendulaires et étant chacun reçu dans une première ouverture ménagée dans le support,
- deux premiers organes de roulement, chaque premier organe de roulement coopérant d'une part avec une piste de roulement définie par le support et une première piste de roulement définie par un des premiers organes de liaison roulement, et
- deux premiers organes de butée, chaque premier organe de butée étant associé à un premier organe de liaison.

Chaque paire de deuxièmes masses pendulaires peut ne comprendre qu'un seul deuxième organe de liaison et le support peut comprendre pour chaque paire de deuxièmes masses pendulaires une unique deuxième ouverture recevant le deuxième organe de liaison. Chaque deuxième organe de liaison peut présenter un plan de symétrie, ce plan de symétrie contenant l'axe de rotation du support lorsque le dispositif est au repos.

Chaque deuxième organe de liaison peut s'étendre angulairement dans le sens trigonométrique d'une première vers une deuxième extrémité dudit deuxième organe de liaison, chaque deuxième organe de liaison étant associé à deux deuxièmes organes de butée pour le déplacement des deuxièmes masses pendulaires par rapport au support, l'un des deuxièmes organes de butée étant voisin de la première extrémité dudit deuxième organe de liaison tandis que l'autre deuxième organe de butée est voisin de la deuxième extrémité dudit deuxième organe de butée. Les deuxièmes organes de butée peuvent ainsi être disposés de façon symétrique sur le deuxième organe de liaison, la symétrie étant déterminée par rapport au plan de symétrie défini ci-dessus pour le deuxième organe de liaison.

Chaque deuxième ouverture peut s'étendre entre deux extrémités circonférentielles sur un quatrième secteur angulaire mesuré depuis l'axe de rotation, la valeur de ce quatrième secteur angulaire étant inférieure à la valeur du troisième secteur angulaire. Autrement dit, la deuxième ouverture associée à une paire de deuxièmes masses pendulaires présente une dimension angulaire inférieure à celle de chaque première ouverture associée à une paire de premières masses pendulaires. Ce dimensionnement permet l'obtention de valeurs d'ordre différentes pour les premières masses pendulaires par rapport aux deuxièmes masses pendulaires. Similairement à ce qui a été décrit par rapport au déplacement des premières masses pendulaires, le déplacement des deuxièmes masses pendulaires par rapport au support peut combiner une translation des deuxièmes masses pendulaires autour d'un axe parallèle à l'axe de rotation du support et une rotation des deuxièmes masses pendulaires autour de leur centre de gravité.

En variante, seules les premières masses pendulaires présentent ce mouvement combiné, les deuxièmes masses pendulaires ne se déplaçant qu'en translation autour d'un axe parallèle à l'axe de rotation.

Chaque deuxième organe de liaison peut définir deux deuxièmes pistes de roulement distinctes, chaque deuxième piste de roulement coopérant avec un unique deuxième organe de roulement. Les deuxièmes pistes de roulement peuvent présenter sensiblement la même forme et être angulairement dans le prolongement l'une de l'autre.

Chaque paire de deuxièmes masses pendulaires peut ainsi comprendre :
- deux deuxièmes masses pendulaires,
- un seul deuxième organe de liaison solidarisant ces deux masses pendulaires et étant reçu dans une deuxième ouverture ménagée dans le support,
- deux deuxièmes organes de roulement, chaque deuxième organe de roulement coopérant d'une part avec une piste de roulement définie par le support et une deuxième piste de roulement définie par le deuxième organe de roulement, et
- deux deuxièmes organes de butée, chaque deuxième organe de butée étant associé au deuxième organe de liaison.

Dans tout ce qui précède, chaque premier, respectivement deuxième, organe de butée est par exemple porté par les deux premières, respectivement deuxièmes, masses pendulaires reliées par le premier, respectivement deuxième, organe de liaison auquel cet organe de butée est associé. Chaque premier, respectivement deuxième, organe de butée s'étend par exemple axialement entre les deux premières, respectivement deuxièmes, masses pendulaires, et il est solidarisé à chacune de ces masses pendulaires.

Chaque premier, respectivement deuxième, organe de butée peut être configuré de manière à amortir les chocs entre le premier, respectivement deuxième, organe de liaison et le support, le premier, respectivement deuxième, organe de butée pouvant alors être qualité d'«élastique ».

Chaque premier, respectivement deuxième, organe de butée peut définir :
- une première zone de butée contre le support pour le déplacement des premières, respectivement deuxièmes, masses pendulaires par rapport au support dans le sens trigonométrique, et
- une deuxième zone de butée contre le support pour le déplacement des premières, respectivement deuxièmes, masses pendulaires par rapport au support dans le sens anti-trigonométrique.

Chaque zone de butée peut être à distance l'une de l'autre, de sorte que le contact entre le premier, respectivement deuxième, organe de butée et le support s'effectue à des endroits différents dudit organe de butée selon le sens de déplacement des premières, respectivement deuxièmes, masses pendulaires par rapport au support, réduisant ainsi l'usure de l'organe de butée qui subit localement moins de chocs contre le support que selon l'art antérieur.

Chaque premier organe de butée est par exemple configuré pour que :
- l'une de la première et de la deuxième zone de butée puisse venir au contact du contour radialement intérieur de la première ouverture recevant le premier organe de liaison, et
- l'autre de la première et de la deuxième zone de butée puisse venir au contact d'un contour latéral de ladite première ouverture, ce contour latéral reliant le contour radialement intérieur et le contour radialement extérieur de la première ouverture.

Pour deux premiers organes de liaison associés à une même paire de premières masses pendulaires, l'interaction entre lesdites zones de butée et le support peut être inversée. Ainsi, dans un exemple de mise en oeuvre de l'invention :
- l'un des premiers organes de butée présente une première zone de butée venant au contact du contour latéral de la première ouverture lorsque les premières masses pendulaires sont dans une position de butée à l'issue d'un déplacement par rapport au support selon le sens trigonométrique, et une deuxième zone de butée venant au contact du contour radialement intérieur de la première ouverture lorsque les premières masses pendulaires sont dans une position de butée à l'issue d'un déplacement par rapport au support dans le sens anti-trigonométrique, et
- l'autre premier organe de butée présente une première zone de butée venant au contact du contour radialement intérieur de la première ouverture lorsque les premières masses pendulaires sont dans une position de butée à l'issue d'un déplacement par rapport au support selon le sens trigonométrique et une deuxième zone de butée venant au contact du contour latéral de la première ouverture lorsque les premières masses pendulaires sont dans une position de butée à l'issue d'un déplacement par rapport au support dans le sens anti-trigonométrique.

Chaque premier, respectivement deuxième, organe de butée peut comprendre des portions élastiques au niveau de la première et de la deuxième zone de butée, et le premier, respectivement deuxième, organe de liaison et la première, respectivement deuxième, ouverture peuvent avoir des formes telles que, lorsque le premier, respectivement deuxième, organe de liaison vient en butée contre le support par l'une de la première et de la deuxième zone de butée sous l'effet d'une force d'inertie :
- la portion élastique de ladite zone de butée se comprime tant que la force d'inertie est inférieure à une valeur prédéfinie, et
- le premier, respectivement deuxième, organe de liaison vient au contact du support lorsque la force d'inertie est supérieure à cette valeur prédéfinie.

Autrement dit, les portions élastiques peuvent être dimensionnées de manière à ce que le premier, respectivement deuxième, organe de butée seul absorbe les chocs liés à la venue en butée du premier, respectivement deuxième, organe de liaison contre le support tant que la force liée à cette venue en butée est inférieure à une valeur prédéfinie. Lorsque cette valeur prédéfinie est dépassée, le premier, respectivement deuxième, organe de butée ne peut plus se comprimer davantage, de sorte que le premier, respectivement deuxième, organe de liaison vient en contact avec le support, ce contact absorbant alors les chocs. On peut ainsi :
- d'une part éviter d'avoir à dimensionner les portions élastiques du premier, respectivement deuxième, organe de butée pour qu'elles absorbent la totalité des chocs entre le premier, respectivement deuxième, organe de liaison et le support, et
- d'autre part protéger les portions élastiques de dégradations lorsqu'elles ne sont plus capables d'absorber les chocs puisque ces chocs sont alors absorbés par le contact direct entre le premier, respectivement deuxième, organe de liaison avec le support.

Selon un exemple de mise en oeuvre de l'invention, chaque premier, respectivement deuxième, organe de butée comprend :
- deux tiges de maintien espacées angulairement, et
- une pièce de jonction, notamment solidaire des tiges de maintien, s'étendant entre les deux tiges et apte à venir au contact du support lorsque le premier, respectivement deuxième, organe de liaison est en butée contre celui-ci,
la première zone de butée comprenant la portion de la pièce de jonction en regard d'une des tiges et la deuxième zone de butée comprenant la portion de la pièce de jonction en regard de l'autre tige.

La pièce de jonction peut être en permanence ou non au contact du premier, respectivement deuxième, organe de liaison.

Chaque extrémité axiale d'une tige de maintien est par exemple disposée dans un logement ménagé dans une des premières, respectivement deuxièmes, masses pendulaires, de manière à maintenir radialement et angulairement le premier, respectivement deuxième, organe de butée par rapport aux premières, respectivement deuxièmes, masses pendulaires, et ainsi par rapport au premier, respectivement deuxième, organe de liaison.

Les logements recevant les extrémités respectives d'une tige de maintien peuvent être configurés pour assurer un maintien axial desdites tiges, et donc de l'organe de butée. Il s'agit par exemple de logements borgnes.

Dans un plan orthogonal à l'axe de rotation pour le support, la pièce de jonction peut présenter au moins une portion incurvée. La pièce de jonction peut présenter dans ce plan une forme de bande.

Les tiges et la pièce de jonction peuvent être réalisées d'une seule pièce ou non.

Lorsque les tiges et la pièce de jonction sont des pièces distinctes, seule la pièce de jonction ou seules les tiges de maintien peuvent présenter les propriétés élastiques mentionnées ci-dessus permettant l'absorption des chocs. La pièce de jonction est par exemple en élastomère.

Dans tout ce qui précède, la première, respectivement deuxième, piste de roulement définie par un premier, respectivement deuxième, organe de liaison peut être ménagée par une partie du contour dudit organe de liaison. La première, respectivement deuxième, piste de roulement définie par le premier, respectivement deuxième, organe de liaison est par exemple définie par une partie seulement, dans un plan orthogonal à l'axe de rotation du support, du contour radialement extérieur de ce premier, respectivement deuxième, organe de liaison. Le contour du premier, respectivement deuxième, organe de liaison peut, au moins au niveau de la piste de roulement, être définie ou non par un revêtement formé sur le reste cet organe de liaison.

Chacune de la première, respectivement deuxième, piste de roulement définie par un premier, respectivement deuxième, organe de liaison et de la piste de roulement définie par le support peut présenter une ou plusieurs portions concaves dans un plan perpendiculaire à l'axe de rotation du support, ces portions coopérant avec l'organe de roulement.

La piste de roulement définie par le support est par exemple définie par une portion du contour, notamment du contour radialement extérieur, de la première, respectivement deuxième, ouverture recevant l'organe de liaison.

Le premier, respectivement deuxième, organe de roulement est par exemple un rouleau de section circulaire dans un plan perpendiculaire à l'axe de rotation du support. Les extrémités axiales du rouleau peuvent être dépourvues de rebord annulaire fin.

Chaque premier, respectivement deuxième, rouleau peut être uniquement sollicité en compression entre les pistes de roulement mentionnées ci-dessus.

Dans tout ce qui précède, chaque premier, respectivement deuxième, organe de liaison peut être rigidement couplé aux premières, respectivement deuxièmes, masses pendulaires, par exemple par soudure, frettage, ou vissage.

Chaque premier, respectivement deuxième, organe de liaison peut comprendre deux barres, chaque barre s'étendant axialement et comprenant :
- une première région rigidement couplée à une des premières, respectivement deuxièmes, masses pendulaires de la paire,
- une deuxième région rigidement couplée à l'autre première, respectivement deuxième, masse pendulaire de la paire, et
- une région intermédiaire reçue dans la première, respectivement deuxième, ouverture.

La première région et la deuxième région peuvent former des extrémités opposées de ladite barre. Les deux barres peuvent être sensiblement identiques.

Le premier, respectivement deuxième, organe de liaison peut comprendre une poutre de liaison s'étendant perpendiculairement aux deux barres et étant rigidement couplée à la région intermédiaire de chacune desdites barres.

En variante, la poutre de liaison qui s'étend perpendiculairement aux deux barres peut être réalisée d'une seule pièce avec ces dernières.

Lorsque le premier, respectivement deuxième, organe de liaison comprend deux barres et une poutre de liaison telles que définies ci-dessus, la première, respectivement deuxième, piste de roulement définie par l'organe de liaison peut être formée par une partie du contour radialement extérieur de la poutre de liaison.

Chaque paire de masses pendulaires peut comprendre au moins une pièce d'interposition disposée axialement entre le support et une masse pendulaire de ladite paire. Une telle pièce d'interposition permet d'éviter un contact entre le support et les masses pendulaires de ladite paire. Lorsque le support et les masses pendulaires sont réalisés en métal, la présence de cette pièce d'interposition permet d'éviter un contact métallique entre masses pendulaires et support, et ainsi une usure de ces éléments.

La pièce d'interposition est, dans les exemples considérés, une pièce distincte des masses pendulaires et du support. Chaque pièce d'interposition peut être portée par une des masses pendulaires. La pièce d'interposition peut se présenter sous la forme d'un patin.

Dans tout ce qui précède, le support peut présenter une pluralité de cavités adjacentes angulairement et disposées radialement intérieurement par rapport aux premières et aux deuxièmes ouvertures. Ces cavités peuvent présenter dans un plan orthogonal à l'axe de rotation une forme s'évasant radialement vers l'extérieur, les bords latéraux de chaque cavité divergeant lorsque l'on se déplace radialement vers l'extérieur du support. De telles cavités peuvent permettre d'optimiser l'inertie du support du dispositif.

Dans une variante de ce qui a été décrit précédemment, la première valeur d'ordre filtrée par les premières masses pendulaires est égale à l'ordre d'excitation du moteur thermique et la deuxième valeur d'ordre filtrée par les deuxièmes masses pendulaires diffère d'un multiple de cet ordre d'excitation du moteur thermique, étant notamment comprise entre 0,8 fois et 1,2 fois ce multiple, par exemple entre 0,8 fois et 1,2 le double ou entre 0, 8 fois et 1,2 fois le triple, de cet ordre d'excitation du moteur thermique. On dira alors que les deuxièmes masses pendulaires sont désaccordées de ce multiple de l'ordre d'excitation du moteur.

L'invention a encore pour objet, selon un autre de ses aspects, un composant d'un système de transmission pour véhicule automobile, notamment un double volant amortisseur, un convertisseur de couple hydrodynamique, ou un disque de friction, comprenant un dispositif d'amortissement tel que défini ci-dessus.

Dans un tel composant, le support du pendule peut être l'un parmi :
- un voile du composant,
- une rondelle de guidage du composant,
- une rondelle de phasage du composant, ou
- un support distinct dudit voile, de ladite rondelle de guidage et de ladite rondelle de phasage.

L'invention a encore pour objet, selon un autre de ses aspects, une chaîne de propulsion pour véhicule automobile, comprenant :
- un moteur thermique, notamment à trois ou quatre cylindres, et
- un dispositif d'amortissement tel que défini ci-dessus, étant notamment intégré à un composant pour système de transmission de véhicule automobile tel que défini ci-dessus.

L'invention a encore pour objet, selon un autre de ses aspects, un dispositif d'amortissement d'oscillations de torsion, comprenant :
- un support apte à se déplacer en rotation autour d'un axe,
- au moins une paire de premières masses pendulaires,
- au moins une paire de deuxièmes masses pendulaires,
le dispositif étant configuré de manière à ce que
- les premières masses pendulaires permettent de filtrer une première valeur d'ordre des oscillations de torsion, et
- les deuxièmes masses pendulaires permettent de filtrer une deuxième valeur d'ordre des oscillations de torsion, différente de la première valeur d'ordre,
l'une au moins de la première valeur d'ordre et de la deuxième valeur d'ordre étant égale à ou multiple de l'ordre d'excitation d'un moteur thermique apte à être associé au dispositif, et l'autre de la première valeur d'ordre et de la deuxième valeur d'ordre étant différente de l'ordre d'excitation du moteur thermique et d'un multiple de l'ordre d'excitation du moteur thermique.

Tout ou partie des caractéristiques mentionnées précédemment s'appliquent à cet autre aspect de l'invention.

En particulier, le multiple ci-dessus peut être égal à deux ou à trois.

La première ou la deuxième valeur d'ordre différente de l'ordre d'excitation du moteur thermique, respectivement d'un multiple de cet ordre peut être comprise entre 0,8 fois et 1,2 fois cet ordre d'excitation, respectivement entre 0,8 fois et 1,2 fois le multiple de cet ordre d'excitation.

Selon un exemple de mise en oeuvre de cet autre aspect de l'invention, la première valeur d'ordre est différente de l'ordre d'excitation du moteur thermique et d'un multiple de cet ordre d'excitation, et la deuxième valeur d'ordre est égale à un multiple, notamment le double ou le triple, de l'ordre d'excitation du moteur.

Selon une variante de cet exemple de mise en oeuvre de cet autre aspect de l'invention, la première valeur d'ordre est égale à l'ordre d'excitation du moteur thermique et la deuxième valeur d'ordre est différente de cet ordre d'excitation et d'un multiple, notamment du double ou du triple, de l'ordre d'excitation du moteur.

L'invention a encore pour objet, selon un autre de ses aspects, une chaîne de propulsion pour véhicule automobile, comprenant :
- un moteur thermique, notamment à trois ou quatre cylindres, et
- un dispositif d'amortissement tel que défini ci-dessus.

Dans tout ce qui précède, le filtrage par une première masse pendulaire de la première valeur d'ordre est obtenu en agissant sur tout ou partie des paramètres mentionnés ci-dessous :
- forme de la première piste de roulement définie un premier organe de liaison, cette première piste coopérant avec un premier organe de roulement pour guider le déplacement de la première masse pendulaire par rapport au support,
- forme de la piste de roulement définie par le support et coopérant avec le premier organe de roulement,
- inertie de la première masse pendulaire,
- distance, lorsque le dispositif est au repos, entre le centre de gravité de la première masse pendulaire et l'axe de rotation du support, notamment diamètre du premier organe de roulement,
- distance, lorsque le dispositif est au repos, entre le centre de gravité de la première masse pendulaire et le bord radialement intérieur de la première ouverture définissant un point d'accrochage pour cette première masse pendulaire.

Similairement, dans tout ce qui précède, le filtrage par une deuxième masse pendulaire de la deuxième valeur d'ordre est obtenu en agissant sur tout ou partie des paramètres mentionnés ci-dessous :
- forme des deuxièmes pistes de roulement définies un deuxième organe de liaison, ces deuxièmes pistes coopérant chacune avec un deuxième organe de roulement pour guider le déplacement de la deuxième masse pendulaire par rapport au support,
- forme de la piste de roulement définie par le support et coopérant avec le deuxième organe de roulement,
- inertie de la deuxième masse pendulaire,
- distance, lorsque le dispositif est au repos, entre le centre de gravité de la deuxième masse pendulaire et l'axe de rotation du support, notamment diamètre du deuxième organe de roulement,
- distance, lorsque le dispositif est au repos, entre le centre de gravité de la deuxième masse pendulaire et le bord radialement intérieur de la deuxième ouverture définissant un point d'accrochage pour cette deuxième masse pendulaire.

Par exemple, les premières pistes de roulement ont des formes adaptées à la filtration de la première valeur d'ordre tandis que les deuxièmes pistes de roulement ont des formes adaptées à la filtration de la deuxième valeur d'ordre.

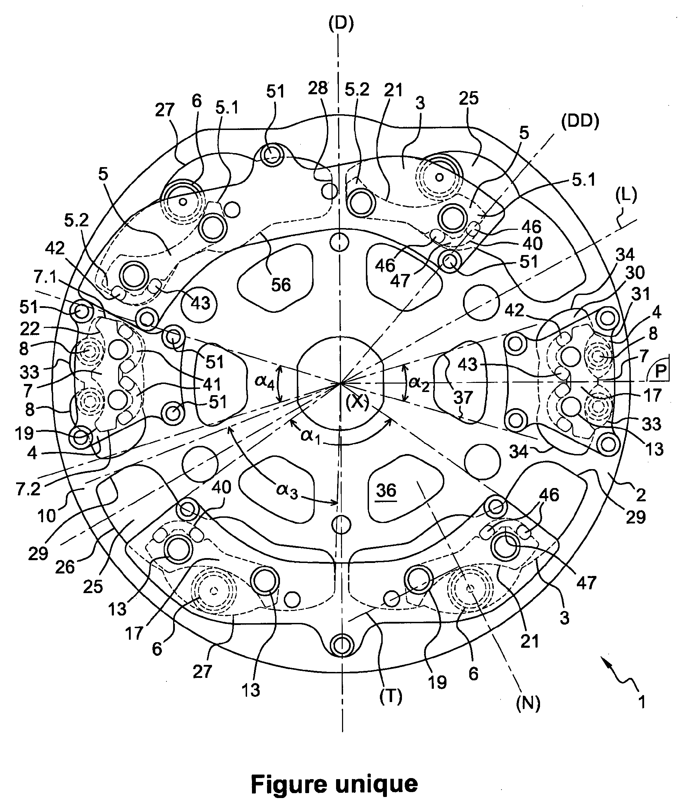

L'invention pourra être mieux comprise à la lecture de la description qui va suivre d'un exemple non limitatif de mise en oeuvre de celle-ci et à l'examen du dessin annexé sur lequel la figure unique représente un dispositif d'amortissement selon un exemple de mise en oeuvre de l'invention.

On a représenté sur la figure un dispositif d'amortissement 1 selon un exemple de mise en oeuvre de l'invention. Le dispositif d'amortissement 1 est de type oscillateur pendulaire.

La partie au-dessous de la ligne en pointillé L de la figure correspond au dispositif 1 au repos tandis que la partie au-dessus de cette ligne L correspond au dispositif 1 lorsqu'il filtre des oscillations de torsion.

Le dispositif 1 est notamment apte à équiper un système de transmission de véhicule automobile, étant par exemple intégré à un composant non représenté d'un tel système de transmission tel qu'un double volant amortisseur, un convertisseur de couple hydrodynamique ou un disque de friction. Ce composant peut faire partie d'une chaîne de propulsion d'un véhicule automobile, cette dernière comprenant un moteur thermique notamment à trois ou quatre cylindres.

De manière connue, un tel composant peut comprendre un amortisseur de torsion présentant au moins un élément d'entrée, au moins un élément de sortie, et des organes élastiques à action circonférentielle qui sont interposés entre lesdits éléments d'entrée et de sortie. Au sens de la présente demande, les termes « entrée » et « sortie » sont définis par rapport au sens de transmission du couple depuis le moteur thermique du véhicule vers les roues de ce dernier.

Le dispositif 1 comprend dans l'exemple considéré:
- un support 2 apte à se déplacer en rotation autour d'un axe X,
- une pluralité de premières masses pendulaires 3 mobiles par rapport au support 2,
- des premiers organes de liaison 5 des premières masses pendulaires 3, deux premiers organes de liaison 5 reliant deux premières masses pendulaires 3, de manière à former une paire de premières masses pendulaires 3,
- des premiers organes de roulement 6, chaque premier organe de roulement 6 étant associé à un premier organe de liaison 5,
- une pluralité de deuxièmes masses pendulaires 4 mobiles par rapport au support 2,
- des deuxièmes organes de liaison 7 des deuxièmes masses pendulaires 4, un deuxième organe de liaison 7 reliant deux deuxièmes masses pendulaires 4, de manière à former une paire de deuxièmes masses pendulaires 4, et
- des deuxièmes organes de roulement 8, deux deuxièmes organes de roulement 8 étant associés à un deuxième organe de liaison 7.

Dans l'exemple considéré, le dispositif 1 comprend deux paires de premières masses pendulaires 3 et deux paires de deuxièmes masses pendulaires 4, les paires de premières masses pendulaires 3 étant disposées angulairement en alternance des paires de deuxièmes masses pendulaires 4.

Le support 2 du dispositif d'amortissement 1 peut être constitué par :
- un élément d'entrée de l'amortisseur de torsion,
- un élément de sortie ou un élément de phasage intermédiaire disposé entre deux séries de ressort de l'amortisseur, ou
- un élément lié en rotation à un des éléments précités et distinct de ces derniers, étant alors par exemple un support propre au pendule.

Le dispositif 1 peut notamment être porté par une rondelle de guidage ou une rondelle de phasage, et être disposé à la périphérie radialement externe de ces rondelles.

Dans l'exemple considéré, le support 2 présente globalement une forme d'anneau comportant deux côtés opposés 10 qui sont ici des faces planes.

Les premières masses pendulaires 3 appartenant à une même paire sont dans l'exemple considéré espacées axialement l'une par rapport à l'autre, l'une de ces premières masses pendulaires 3 étant disposée du premier côté 10 du support 2 et l'autre première masse pendulaire 3 étant disposée du deuxième côté du support 2.

Similairement, les deuxièmes masses pendulaires 4 appartenant à une même paire sont dans l'exemple considéré espacées axialement l'une par rapport à l'autre, l'une de ces deuxièmes masses pendulaires 4 étant disposée du premier côté 10 du support 2 et l'autre deuxième masse pendulaire 4 étant disposée du deuxième côté du support 2.

Chaque première 3 et deuxième 4 masse pendulaire présente globalement dans l'exemple décrit une forme de plaquette et s'étend circonférentiellement en arc de cercle de sorte que ces masses pendulaires présentent ici un bord radialement intérieur et un bord radialement extérieur qui suivent globalement les bords correspondants du support 2.

Dans l'exemple considéré, chaque première masse pendulaire 3 s'étend sur un premier secteur angulaire α₁ mesuré depuis l'axe de rotation X du support 2 lorsque le dispositif 1 est au repos et chaque deuxième masse pendulaire 4 s'étend sur un deuxième secteur angulaire α₂ mesuré depuis l'axe de rotation X dans les mêmes conditions. Comme on peut le voir, α₁ est dans l'exemple décrit supérieur à α₂.

Chaque premier organe de liaison 5 s'étend angulairement depuis une première 5.1 vers une deuxième 5.2 extrémité dans le sens trigonométrique. Chaque premier organe de liaison 5 est ici rigidement couplé à chaque première masse pendulaire 3 d'une paire, c'est-à-dire qu'il n'existe pas de degré de liberté entre le premier organe de liaison 5 et ces premières masses pendulaires 3.

Similairement, chaque deuxième organe de liaison 7 s'étend angulairement depuis une première 7.1 vers une deuxième 7.2 extrémité dans le sens trigonométrique. Chaque deuxième organe de liaison 7 est ici rigidement couplé à chaque deuxième masse pendulaire 4 d'une paire, c'est-à-dire qu'il n'existe pas de degré de liberté entre le deuxième organe de liaison 7 et ces deuxièmes masses pendulaires 4.

Comme on peut le voir sur la figure, chaque organe de liaison 5 ou 7 peut comprendre deux barres 13 sensiblement identiques et s'étendant toutes deux parallèlement à l'axe X. Chaque extrémité axiale d'une barre 13 est dans l'exemple considéré solidarisée à l'une des masses pendulaires 3, 4 de la paire de masses pendulaires. Chaque extrémité d'une barre 13 est par exemple reçue dans un trou traversant ménagé dans une masse pendulaire 3, 4 et un rivetage desdites extrémités peut ensuite avoir lieu pour permettre la solidarisation mentionnée ci-dessus.

Dans l'exemple considéré, le premier organe de liaison 5, respectivement le deuxième organe de liaison 7, forme ainsi une entretoise déterminant notamment l'écartement axial entre les premières masses pendulaires 3, respectivement deuxièmes masses pendulaires 4, d'une paire de masses pendulaires.

Toujours dans l'exemple considéré, chaque organe de liaison 5 ou 7 comprend en outre une poutre de liaison 17 s'étendant perpendiculairement à l'axe X. La poutre de liaison 17 est ici rigidement couplée aux barres 13 au niveau de régions intermédiaires de ces dernières, disposées entre les extrémités axiales.

Comme on le verra par la suite, dans l'exemple considéré :
- la poutre de liaison 17 de chaque premier organe de liaison 5 comprend un contour radialement extérieur 19 dont une partie définit une première piste de roulement 21, et
- la poutre de liaison 17 de chaque deuxième organe de liaison 7 comprend un contour radialement extérieur 19 dont deux parties distinctes définissent chacune une deuxième piste de roulement 22.

Chaque organe de liaison 5 ou 7 peut être une pièce monobloc obtenue par frappe. En variante, chaque organe de liaison 5 ou 7 est réalisé en au moins deux pièces, respectivement une pièce qui forme la poutre de liaison 17 et qui comporte à chaque extrémité un trou axial pour le montage dans chaque trou d'une paire de rivets constituant les barres 13.

Comme représenté sur la figure chaque premier organe de liaison 5 peut présenter une forme asymétrique par rapport à la normale N à la tangente T au contact, lorsque le dispositif 1 est au repos, entre le premier organe de roulement 6 et la piste de roulement 21 définie par cet organe de liaison 5. Autrement dit, l'organe de liaison 5 s'étend davantage d'un côté de l'autre de cette normale N dans un plan orthogonal à l'axe de rotation X. En revanche, dans l'exemple considéré, chaque deuxième organe de liaison 7 présente une forme symétrique par rapport à un plan P contenant l'axe de rotation X lorsque le dispositif est au repos.

Comme on peut le voir sur la figure, chaque premier organe de liaison 5 s'étend en partie dans une première ouverture 25 ménagée dans le support 2. Dans l'exemple considéré, chaque paire de premières masses pendulaires 3 est associée à deux premières ouvertures 25 et chacune de ces premières ouvertures 25 coopère avec un seul premier organe de liaison 5. La région intermédiaire de chaque barre 13 et la poutre de liaison 17 sont par exemple reçues dans la première ouverture 25.

Comme on le verra par la suite, le contour radialement extérieur 26 de chaque première ouverture 25, qui est défini par un bord du support 2, comprend dans l'exemple considéré une portion qui définit une piste de roulement 27.

Dans le plan de la figure, les premières ouvertures 25 associées à une paire de premières masses pendulaires 3 peuvent être des images symétriques l'une de l'autre par rapport à une droite D passant par l'axe de rotation X du support 2 et par le montant 28 séparant ces deux premières ouvertures 25. La droite D forme ici une bissectrice de l'angle maximal défini entre une extrémité angulaire 29 d'une de ces deux premières ouvertures 25 et une extrémité angulaire 29 de l'autre de ces deux premières ouverture 25 Chaque extrémité angulaire 29 est ici définie par un bord latéral de la première ouverture 25.

En outre, comme représenté encore sur la figure, chaque première ouverture 25 peut s'étendre entre ses deux extrémités angulaires 29 sur un troisième secteur angulaire α₃ mesuré depuis l'axe de rotation X du support 2. Dans le plan de la figure, chaque première ouverture 25 peut être asymétrique par rapport à une droite DD passant par l'axe X et faisant avec chaque extrémité 29 un angle égal à α₃/2.

Comme on peut le voir sur la figure, chaque deuxième organe de liaison 7 s'étend en partie dans une deuxième ouverture 30 ménagée dans le support 2. Dans l'exemple considéré, chaque paire de deuxièmes masses pendulaires 4 est associée à une unique deuxième ouverture 30 et cette deuxième ouverture 30 coopère avec un seul deuxième organe de liaison 7. La région intermédiaire de chaque barre 13 et la poutre de liaison 17 sont par exemple reçues dans la deuxième ouverture 30.

Comme on le verra par la suite, le contour radialement extérieur 31 de chaque deuxième ouverture 30, qui est défini par un bord du support 2, comprend dans l'exemple considéré une portion qui définit une piste de roulement 33.

Dans le plan de la figure, chaque deuxième ouverture 30 peut s'étendre entre ses deux extrémités angulaires 34 sur un quatrième secteur angulaire α₄ mesuré depuis l'axe de rotation X du support 2. Comme on peut le voir, α₄ est ici inférieur à α₄. Dans le plan de la figure, chaque deuxième ouverture 30 peut être symétrique par rapport à une droite passant par l'axe X et faisant avec chaque extrémité 34 de cette deuxième ouverture 30 un angle égal à α₄/2.

Comme on peut le voir sur la figure, le support 2 comprend encore dans l'exemple représenté des cavités 36 adjacentes angulairement et disposées radialement intérieurement par rapport aux premières ouvertures 25 et aux deuxièmes ouvertures 30. Ces cavités 36 peuvent présenter dans le plan de la figure une forme s'évasant radialement vers l'extérieur, les bords latéraux 37 de chaque cavité 36 divergeant lorsque l'on se déplace radialement vers l'extérieur du support 2.

On va maintenant décrire plus précisément les premiers organes de roulement 6 et les deuxièmes organes de roulement 8 qui sont ici identiques. Chaque organe de roulement 6 ou 8 est mobile par rapport au support 2 et aux masses pendulaires 3 ou 4. Dans l'exemple considéré, chaque organe de roulement 6 ou 8 est formé par un rouleau. Chaque rouleau présente dans le plan de la figure une section circulaire. Chaque rouleau peut être plein mais, en variante, il pourrait s'agir d'une pièce creuse, par exemple de forme tubulaire. Chaque rouleau est ici est dépourvu de rebord annulaire ménagé à chacune de ses extrémités axiales et s'étendant perpendiculairement à l'axe X.

Chaque premier organe de roulement 6 coopère dans l'exemple considéré avec une première piste de roulement 21 et la piste de roulement 27 mentionnées précédemment. Plus précisément, le premier organe de roulement 6 coopère au niveau radialement intérieur avec la première piste de roulement 21 et au niveau radialement extérieur avec la piste de roulement 27 lors de son déplacement par rapport au support 2 et aux premières masses pendulaires 3. Le premier organe de roulement peut être uniquement sollicité en compression entre les pistes de roulement 21 et 27.

Chaque deuxième organe de roulement 8 coopère dans l'exemple considéré avec une deuxième piste de roulement 22 et la piste de roulement 33 mentionnées précédemment. Plus précisément, le deuxième organe de roulement 8 coopère au niveau radialement intérieur avec la deuxième piste de roulement 22 et au niveau radialement extérieur avec la piste de roulement 33 lors de son déplacement par rapport au support 2 et aux deuxièmes masses pendulaires 4. Le deuxième organe de roulement 8 peut être uniquement sollicité en compression entre les pistes de roulement 22 et 33.

Dans l'exemple considéré, le dispositif 1 comprend encore des pièces d'interposition 51 disposées axialement entre chaque masse pendulaire 3, 4 et le support 2. Chaque pièce d'interposition 51 est ici distincte de la masse pendulaire 3, 4 et du support 2, étant rapportée sur la masse pendulaire 3, 4.

Le nombre de pièces d'interposition 51 peut varier selon qu'elles sont portées par une première masse pendulaire 3 ou par une deuxième masse pendulaire 4. Pour une première masse pendulaire 3, deux pièce d'interposition 51 sensiblement identiques sont par exemple chacune montée sur une extrémité circonférentielle de ladite masse tandis qu'une autre pièce d'interposition 51, de même forme ou non, est montée sur la première masse pendulaire 3 à mi chemin entre les extrémités circonférentielles de ladite masse pendulaire 3.

Pour une deuxième masse pendulaire 4, deux pièces d'interposition 51 sensiblement identiques sont par exemple chacune montée sur une extrémité circonférentielle de ladite masse au niveau radialement intérieur tandis que deux autres pièces d'interposition 51, de même forme ou non, sont montées chacune sur une extrémité circonférentielle de ladite masse au niveau radialement extérieur.

Chaque pièce d'interposition 51 peut comprendre :
- un ou plusieurs tétons destinés à être montés dans un trou ménagé dans la masse pendulaire 3 ou 4 pour assurer la fixation sur cette masse de la pièce d'interposition 51, et
- une partie d'interposition disposée entre la masse pendulaire 3 ou 4 et le support 2 lorsque le dispositif d'amortissement 1 est assemblé.

La portion d'interposition d'une pièce d'interposition 51 a par exemple une forme circulaire dans le plan de la figure.

Dans l'exemple de la figure, chaque pièce d'interposition 51 se présente sous la forme d'un patin, étant notamment réalisée en plastique, mais l'invention n'est pas limitée à ce choix de matériau.

Comme représenté sur la figure, chaque premier organe de liaison 5 est associé à un premier organe de butée 40 pour le déplacement des premières masses pendulaires 3 par rapport au support 2. Pour une paire de premières masses pendulaires 3 à laquelle sont associés deux premiers organes de liaison 5, le premier organe de butée 40 pour l'un des premiers organes de liaison 5 est plus proche de la première extrémité 5.1 que de la deuxième extrémité 5.2 de ce premier organe de liaison 5 tandis que le premier organe de butée 40 pour l'autre premier organe de liaison 5 est plus proche de la deuxième extrémité 5.2 que de la première extrémité 5.1 de cet autre premier organe de liaison 5. Chaque premier organe de butée 40 est ici solidaire d'un des premiers organes de liaison 5.

Comme représenté sur la figure, chaque deuxième organe de liaison 7 est associé à deux deuxièmes organes de butée 41 pour le déplacement des deuxièmes masses pendulaires 4 par rapport au support 2. Pour une paire de deuxièmes masses pendulaires 4 à laquelle est associé un deuxième organe de liaison 7, l'un des deuxièmes organes de butée 41 peut être plus proche de la première extrémité 7.1 que de la deuxième extrémité 7.2 de ce deuxième organe de liaison 7 tandis que l'autre deuxième organe de butée 41 est plus proche de la deuxième extrémité 7.2 que de la première extrémité 7.1 de ce deuxième organe de liaison 7. Chaque deuxième organe de butée 41 est ici solidaire du deuxième organe de liaison 7.

Chaque organe de butée 40 ou 41 définit dans l'exemple considéré :
- une première zone de butée 42 contre le support 2 pour le déplacement des masses pendulaires 3 ou 4 par rapport au support dans le sens trigonométrique, et
- une deuxième zone de butée 43 contre le support 2 pour le déplacement des masses pendulaires 3 ou 4 par rapport au support dans le sens anti-trigonométrique, la deuxième zone de butée 43 étant à distance de la première zone de butée 42.

Dans l'exemple illustré, les premiers organes de butée 40 sont positionnés de façon inversée d'un premier organe de liaison 5 à l'autre d'une même paire de premières masses pendulaires 3. L'un des premiers organes de liaison 5 coopère ainsi avec un premier organe de butée 40 positionné de manière à ce que :
- sa première zone de butée 42 vienne au contact du contour latéral 29 de la première ouverture 25 lorsque les premières masses pendulaires 3 sont dans une position de butée à l'issue d'un déplacement par rapport au support 2 selon le sens trigonométrique, cette position de butée étant représentée sur la figure,
- sa deuxième zone de butée 43 vienne au contact du contour radialement intérieur 56 de la première ouverture 25 lorsque les premières masses pendulaires 3 sont dans une position de butée à l'issue de ce déplacement par rapport au support 2 dans le sens anti trigonométrique.

L'autre premier organe de liaison 5 coopère quant à lui avec un premier organe de butée 40 positionné de manière à ce que :
- sa première zone de butée 42 vienne au contact du contour radialement intérieur 56 de la première ouverture 25 lorsque les premières masses pendulaires 3 sont dans une position de butée à l'issue d'un déplacement par rapport au support selon le sens trigonométrique, et
- sa deuxième zone de butée 43 vienne au contact du contour latéral 29 de la première ouverture 25 lorsque les premières masses pendulaires 3 sont dans une position de butée à l'issue d'un déplacement par rapport au support 2 dans le sens anti-trigonométrique..

Chaque premier organe de butée 40 comprend dans l'exemple considéré des portions élastiques au niveau de la première 42 et de la deuxième 43 zone de butée.

Ces portions élastiques d'une part, les formes de la première ouverture 25 et du premier organe de liaison 5 d'autre part, peuvent être telles que, lorsque le premier organe de liaison 5 vient en butée contre le support 2 via l'une de la première 42 et de la deuxième 43 zone de butée sous l'effet d'une force d'inertie :
- la portion élastique de ladite zone de butée 42, 43 se comprime tant que la force d'inertie est inférieure à une valeur prédéfinie, et
- le premier organe de liaison 5 vient ensuite au contact du support 2 lorsque la force d'inertie est supérieure à cette valeur prédéfinie.

Similairement, chaque deuxième organe de butée 41 peut comprendre des portions élastiques au niveau de la première 42 et de la deuxième 43 zone de butée et ces portions élastiques d'une part, et les formes de la deuxième ouverture 30 et du deuxième organe de liaison 7 peuvent permettre d'obtenir la compression des portions élastiques de l'organe de butée mentionnée ci-dessus en rapport avec les premiers organes de butée 40.

Dans l'exemple considéré, chaque organe de butée 40 ou 41 comprend :
- deux tiges de maintien 46 espacées angulairement, et
- une pièce de jonction 47 s'étendant entre les deux tiges de maintien 46 et apte à venir au contact du support 2 lorsque les organes de liaison 5 ou 7 sont en butée contre celui-ci.

La première zone de butée 42 est ici formée par la portion de la pièce de jonction 47 en regard d'une des tiges de maintien 46 et la deuxième zone de butée 43 est alors formée par la portion de la pièce de jonction 47 en regard de l'autre tige de maintien 46.

Les tiges de maintien 46 et la pièce de jonction 47 peuvent être réalisées d'une seule pièce ou non.

Lorsque les tiges de maintien 46 et la pièce de jonction 47 sont des pièces distinctes, seule la pièce de jonction 47 peut présenter les propriétés élastiques mentionnées ci-dessus permettant la compression des portions élastiques de l'organe de butée. La pièce de jonction 47 est par exemple en élastomère, ayant dans le plan de la figure une forme de bande.

Dans l'exemple considéré, chaque extrémité axiale d'une tige de maintien 46 est disposée dans un logement ménagé dans une des masses pendulaires 3 ou 4. Les logements permettent ici le maintien de chaque tige de maintien 46 dans une position axiale donnée par les masses pendulaires 3 ou 4 entre lesquelles elle est interposée.

Le dispositif 1 est configuré de manière à ce que :
- les premières masses pendulaires 3 filtrent une première valeur d'ordre des oscillations de torsion se propageant dans la chaîne de propulsion du véhicule au niveau du support 2 et,
- les deuxièmes masses pendulaires 4 filtrent une deuxième valeur d'ordre de ces oscillations de torsion, différente de la première valeur d'ordre.

Dans l'exemple considéré, la première valeur d'ordre est légèrement différente de l'ordre d'excitation du moteur thermique. L'ordre d'excitation du moteur thermique vaut par exemple 1,5 lorsque le moteur thermique est à trois cylindres et il peut valoir 2 lorsque le moteur thermique est à quatre cylindres. La première valeur d'ordre est par exemple comprise 0.8 fois et 1.2 fois cet ordre d'excitation du moteur thermique.

Toujours dans l'exemple considéré, la deuxième valeur d'ordre est égale à un multiple de l'ordre d'excitation du moteur thermique. Ce multiple peut être égal à deux, de sorte que la deuxième valeur d'ordre est alors égale à 3 lorsque le moteur thermique est à trois cylindres, et à 4 lorsque le moteur thermique est à quatre cylindres.

Dans le cas d'un moteur thermique à trois cylindres, la première valeur d'ordre est par exemple égale à 1,45, soit à 96,7% de l'ordre d'excitation de ce moteur.

Dans le cas d'un moteur thermique à quatre cylindres, la première valeur d'ordre est par exemple égale à 1,95, soit à 97,5% de l'ordre d'excitation de ce moteur.

L'invention n'est pas limitée aux exemples qui viennent d'être décrits.

## Revendications

1. Chaîne de propulsion pour véhicule automobile, comprenant :
- un moteur thermique, notamment à trois ou quatre cylindres, et
- un dispositif d'amortissement (1), comprenant:
- un support (2) apte à se déplacer en rotation autour d'un axe (X),
- au moins une paire de premières masses pendulaires (3),
- au moins une paire de deuxièmes masses pendulaires (4),
le dispositif (1) étant configuré de manière à ce que
- les premières masses pendulaires (3) permettent de filtrer une première valeur d'ordre des oscillations de torsion, et
- les deuxièmes masses pendulaires (4) permettent de filtrer une deuxième valeur d'ordre des oscillations de torsion, différente de la première valeur d'ordre,
l'une au moins de la première valeur d'ordre et de la deuxième valeur d'ordre étant égale à ou multiple de l'ordre d'excitation du moteur thermique, et l'autre de la première valeur d'ordre et de la deuxième valeur d'ordre étant différente de l'ordre d'excitation de ce moteur thermique et d'un multiple de l'ordre d'excitation du moteur thermique.

2. Chaîne de propulsion selon la revendication 1, le multiple de l'ordre d'excitation du moteur thermique étant égal à deux ou à trois.

3. Chaîne de propulsion selon la revendication 1 ou 2, la première ou la deuxième valeur d'ordre différente de l'ordre d'excitation du moteur thermique, respectivement d'un multiple de cet ordre, étant comprise entre 0,8 fois et 1,2 fois cet ordre d'excitation, respectivement entre 0,8 fois et 1,2 fois le multiple de cet ordre d'excitation.

4. Chaîne de propulsion selon l'une quelconque des revendications précédentes, la première valeur d'ordre étant différente de l'ordre d'excitation du moteur thermique et d'un multiple de cet ordre d'excitation, et la deuxième valeur d'ordre étant égale à un multiple, notamment le double ou le triple, de l'ordre d'excitation du moteur thermique.

5. Chaîne de propulsion selon l'une quelconque des revendications 1 à 3, la première valeur d'ordre étant égale à l'ordre d'excitation du moteur thermique et la deuxième valeur d'ordre étant différente de cet ordre d'excitation et d'un multiple, notamment le double ou le triple, de l'ordre d'excitation du moteur thermique.

6. Chaîne de propulsion selon l'une quelconque des revendications précédentes, la paire de premières masses pendulaires (3) étant angulairement décalée par rapport à la paire de deuxièmes masses pendulaires (4).

7. Chaîne de propulsion selon l'une quelconque des revendications précédentes, chaque première masse pendulaire (3) s'étendant angulairement sur un premier secteur angulaire (α₁) mesuré depuis l'axe de rotation (X) du support (2), et chaque deuxième masse pendulaire (4) s'étendant angulairement sur un deuxième secteur angulaire (α₂) mesuré depuis l'axe de rotation (X) du support (2), la valeur du premier secteur angulaire (α₁) étant supérieure à la valeur du deuxième secteur angulaire (α₂).

8. Chaîne de propulsion selon l'une quelconque des revendications précédentes, chaque paire de premières masses pendulaires (3) comprenant deux premiers organes de liaison (5) et le support (2) comprenant pour chaque paire de premières masses pendulaires (3) deux premières ouvertures (25) espacées angulairement, chaque première ouverture (25) recevant l'un des premiers organes de liaison (5).

9. Chaîne de propulsion selon la revendication 8, un montant (27) étant interposé entre les premières ouvertures (25), et les premières ouvertures (25) étant, dans un plan orthogonal à l'axe de rotation (X), des images symétriques par rapport à une droite (D) passant par l'axe de rotation (X) et par le montant (27).

10. Chaîne de propulsion selon la revendication 8 ou 9, chaque première ouverture (25) s'étendant entre deux extrémités circonférentielles (29) sur un troisième secteur angulaire (α₃) mesuré depuis l'axe de rotation (X), et cette première ouverture (25) étant, dans un plan orthogonal audit axe (X), asymétrique par rapport à une droite (DD) passant par l'axe de rotation (X) et faisant avec chaque extrémité circonférentielle (29) de la première ouverture (25) un angle égal à la moitié de la valeur dudit troisième secteur angulaire (α₃).

11. Chaîne de propulsion selon l'une quelconque des revendications 8 à 10, chaque premier organe de liaison (5) définissant une unique première piste de roulement (21) coopérant avec un unique premier organe de roulement (6).

12. Chaîne de propulsion selon l'une quelconque des revendications 8 à 11, chaque paire de deuxièmes masses pendulaires (4) ne comprenant qu'un seul deuxième organe de liaison (7) et le support (2) comprenant pour chaque paire de deuxièmes masses pendulaires (4) une unique deuxième ouverture (30) recevant le deuxième organe de liaison (7).

13. Chaîne de propulsion selon la revendication 12, chaque deuxième organe de liaison (7) définissant deux deuxièmes pistes de roulement (22) distinctes, chaque deuxième piste de roulement (22) coopérant avec un unique deuxième organe de roulement (8).

14. Chaîne de propulsion selon l'une quelconque des revendications précédentes, comprenant un composant pour système de transmission d'un véhicule automobile, notamment un double volant amortisseur, un convertisseur de couple hydrodynamique ou un disque de friction, le dispositif d'amortissement (1) étant intégré à ce composant.

15. Chaîne de propulsion selon la revendication 14, le support (2) du pendule étant l'un parmi :
- un voile du composant,
- une rondelle de guidage du composant,
- une rondelle de phasage du composant, ou
- un support distinct dudit voile, de ladite rondelle de guidage et de ladite rondelle de phasage.

## Patentansprüche

1. Antriebsstrang für ein Kraftfahrzeug, der enthält:
- einen Verbrennungsmotor, insbesondere mit drei oder vier Zylindern, und
- eine Dämpfungsvorrichtung (1), die enthält:
- einen Träger (2), der sich um eine Achse (X) in Drehung verschieben kann,
- mindestens ein Paar erster Pendelmassen (3),
- mindestens ein Paar zweiter Pendelmassen (4), wobei die Vorrichtung (1) so konfiguriert ist, dass
- die ersten Pendelmassen (3) es ermöglichen, einen ersten Ordnungswert der Torsionsschwingungen zu filtern, und
- die zweiten Pendelmassen (4) es ermöglichen, einen zweiten Ordnungswert der Torsionsschwingungen zu filtern, der sich vom ersten Ordnungswert unterscheidet,
wobei mindestens einer der ersten Ordnungswerte und zweiten Ordnungswerte gleich oder ein Vielfaches der Anregungsordnung des Verbrennungsmotors ist, und der andere der ersten Ordnungswerte und zweiten Ordnungswerte sich von der Anregungsordnung dieses Verbrennungsmotors und von einem Vielfachen der Anregungsordnung des Verbrennungsmotors unterscheidet.

2. Antriebsstrang nach Anspruch 1, wobei das Vielfache der Anregungsordnung des Verbrennungsmotors gleich zwei oder drei ist.

3. Antriebsstrang nach Anspruch 1 oder 2, wobei der sich von der Anregungsordnung des Verbrennungsmotors bzw. einem Vielfachen dieser Ordnung unterscheidende erste oder zweite Ordnungswert zwischen dem 0,8-Fachen und dem 1,2-Fachen dieser Anregungsordnung, bzw. zwischen dem 0,8-Fachen und dem 1,2-Fachen des Vielfachen dieser Anregungsordnung liegt.

4. Antriebsstrang nach einem der vorhergehenden Ansprüche, wobei der erste Ordnungswert sich von der Anregungsordnung des Verbrennungsmotors und von einem Vielfachen dieser Anregungsordnung unterscheidet, und der zweite Ordnungswert gleich einem Vielfachen, insbesondere dem Zweifachen oder Dreifachen, der Anregungsordnung des Verbrennungsmotors ist.

5. Antriebsstrang nach einem der Ansprüche 1 bis 3, wobei der erste Ordnungswert gleich der Anregungsordnung des Verbrennungsmotors ist, und der zweite Ordnungswert sich von dieser Anregungsordnung und einem Vielfachen, insbesondere dem Zweifachen oder Dreifachen, der Anregungsordnung des Verbrennungsmotors unterscheidet.

6. Antriebsstrang nach einem der vorhergehenden Ansprüche, wobei das Paar erster Pendelmassen (3) winkelmäßig bezüglich des Paars zweiter Pendelmassen (4) versetzt ist.

7. Antriebsstrang nach einem der vorhergehenden Ansprüche, wobei jede erste Pendelmasse (3) sich winkelmäßig über einen ersten Winkelsektor (α₁) gemessen von der Drehachse (X) des Trägers (2) erstreckt, und jede zweite Pendelmasse (4) sich winkelmäßig über einen zweiten Winkelsektor (α₂) gemessen von der Drehachse (X) des Trägers (2) erstreckt, wobei der Wert des ersten Winkelsektors (α₁) größer als der Wert des zweiten Winkelsektors (α₂) ist.

8. Antriebsstrang nach einem der vorhergehenden Ansprüche, wobei jedes Paar erster Pendelmassen (3) zwei erste Verbindungsorgane (5) enthält, und der Träger (2) für jedes Paar erster Pendelmassen (3) zwei erste winkelmäßig beabstandete Öffnungen (25) enthält, wobei jede erste Öffnung (25) eines der ersten Verbindungsorgane (5) aufnimmt.

9. Antriebsstrang nach Anspruch 8, wobei ein Steg (27) zwischen die ersten Öffnungen (25) eingefügt ist, und die ersten Öffnungen (25) in einer Ebene orthogonal zur Drehachse (X) symmetrische Abbildungen bezüglich einer Geraden (D) sind, die durch die Drehachse (X) und durch den Steg (27) verläuft.

10. Antriebsstrang nach Anspruch 8 oder 9, wobei jede erste Öffnung (25) sich zwischen zwei Umfangsenden (29) über einen dritten Winkelsektor (α₃) erstreckt, der von der Drehachse (X) aus gemessen wird, und diese erste Öffnung (25) in einer Ebene orthogonal zur Achse (X) unsymmetrisch bezüglich einer Geraden (DD) ist, die durch die Drehachse (X) verläuft und mit jedem Umfangsende (29) der ersten Öffnung (25) einen Winkel gleich der Hälfte des Werts des dritten Winkelsektors (α₃) bildet.

11. Antriebsstrang nach einem der Ansprüche 8 bis 10, wobei jedes erste Verbindungsorgan (5) eine einzige erste Laufbahn (21) definiert, die mit einem einzigen ersten Lauforgan (6) zusammenwirkt.

12. Antriebsstrang nach einem der Ansprüche 8 bis 11, wobei jedes Paar zweiter Pendelmassen (4) nur ein einziges zweites Verbindungsorgan (7) enthält, und der Träger (2) für jedes Paar zweiter Pendelmassen (4) eine einzige zweite Öffnung (30) enthält, die das zweite Verbindungsorgan (7) aufnimmt.

13. Antriebsstrang nach Anspruch 12, wobei jedes zweite Verbindungsorgan (7) zwei verschiedene zweite Laufbahnen (22) definiert, wobei jede zweite Laufbahn (22) mit einem einzigen zweiten Lauforgan (8) zusammenwirkt.

14. Antriebsstrang nach einem der vorhergehenden Ansprüche, der ein Bauteil für ein Übertragungssystem eines Kraftfahrzeugs, insbesondere einen Doppelschwungraddämpfer, einen hydrodynamischen Drehmomentwandler oder eine Reibscheibe enthält, wobei die Dämpfungsvorrichtung (1) in dieses Bauteil integriert ist.

15. Antriebsstrang nach Anspruch 14, wobei der Träger (2) des Pendels einer ist von:
- einer Zwischenscheibe des Bauteils,
- einer Führungsscheibe des Bauteils,
- einer Phasenscheibe des Bauteils, oder
- einem von der Zwischenscheibe, der Führungsscheibe und der Phasenscheibe verschiedener Träger.

## Claims

1. Drivetrain for a motor vehicle, comprising:
- a heat engine, notably with three or four cylinders, and
- a damping device (1), comprising:
- a support (2) that can be rotationally displaced about an axis (X),
- at leapt one pair of first pendulum weights (3),
- at least one pair of second pendulum weights (4),
the device (1) being configured so that
- the first pendulum weights (3) make it possible to filter a first order value of the torsional oscillations, and
- the second pendulum weights (4) make it possible to filter a second order value of the torsional oscillations, different from the first order value,
at least one of the first order value and the second order value being equal to or a multiple of the order of excitation of the heat engine, and the other of the first order value and the second order value being different from the order of excitation of this heat engine and from a multiple of the order of excitation of the heat engine.

2. Drivetrain according to Claim 1, the multiple of the order of excitation of the heat engine being equal to two or to three.

3. Drivetrain according to Claim 1 or 2, the first or the second order value different from the order of excitation of the heat engine, respectively from a multiple of this order, lying between 0.8 times and 1.2 times this order of excitation, respectively between 0.8 times and 1.2 times the multiple of this order of excitation.

4. Drivetrain according to any one of the preceding claims, the first order value being different from the order of excitation of the heat engine and from a multiple of this order of excitation, and the second order value being equal to a multiple of, notably two times or three times, the order of excitation of the heat engine.

5. Drivetrain according to any one of Claims 1 to 3, the first order value being equal to the order of excitation of the heat engine and the second order value being different from this order of excitation and from a multiple of, notably two or three times, the order of excitation of the heat engine.

6. Drivetrain according to any one of the preceding claims, the pair of first pendulum weights (3) being offset angularly relative to the pair of second pendulum weights (4).

7. Drivetrain according to any one of the preceding claims, each first pendulum weight (3) extending angularly over a first angular sector (α₁) measured from the axis of rotation (X) of the support (2), and each second pendulum weight (4) extending angularly over a second angular sector (α₂) measured from the axis of rotation (X) of the support (2), the value of the first angular sector (α₁) being greater than the value of the second angular sector (α₂).

8. Drivetrain according to any one of the preceding claims, each pair of first pendulum weights (3) comprising two first link members (5) and the support (2) comprising, for each pair of first pendulum weights (3), two first openings (25) spaced apart angularly, each first opening (25) receiving one of the first link members (5).

9. Drivetrain according to Claim 8, a strut (27) being interposed between the first openings (25), and the first openings (25) being, in a plane orthogonal to the axis of rotation (X), symmetrical images relative to a straight line (D) passing through the axis of rotation (X) and through the strut (27).

10. Drivetrain according to Claim 8 or 9, each first opening (25) extending between two circumferential ends (29) over a third angular sector (α₃) measured from the axis of rotation (X), and this first opening (25) being, in a plane orthogonal to said axis (X), asymmetrical relative to a straight line (DD) passing through the axis of rotation (X) and forming, with each circumferential end (29) of the first opening (25), an angle equal to half the value of said third angular sector (α₃).

11. Drivetrain according to any one of Claims 8 to 10, each first link member (5) defining a single first rolling track (21) cooperating with a single first rolling member (6).

12. Drivetrain according to any one of Claims 8 to 11, each pair of second pendulum weights (4) comprising only a single second link member (7) and the support (2) comprising, for each pair of second pendulum weights (4), a single second opening (30) receiving the second link member (7).

13. Drivetrain according to Claim 12, each second link member (7) defining two distinct second rolling tracks (22), each second rolling track (22) cooperating with a single second rolling member (8).

14. Drivetrain according to any one of the preceding claims, comprising a component for a transmission system of a motor vehicle, notably a dual damping flywheel, a hydrodynamic torque converter or a friction disc, the damping device (1) being incorporated in this component.

15. Drivetrain according to Claim 14, the pendulum support (2) being one out of:
- a web of the component,
- a guiding washer of the component,
- a phasing washer of the component, or
- a support distinct from said web, from said guiding washer and from said phasing washer.
